Europäisches Patentamt

European Patent Office

Office européen des brevets

(19)

(11) **EP 0 611 809 B1**

(12) **EUROPEAN PATENT SPECIFICATION**

(45) Date of publication and mention
of the grant of the patent:
**09.09.1998 Bulletin 1998/37**

(51) Int Cl.6: **C09D 5/02**, C09D 157/00,
C08J 3/02, C08F 2/22

(21) Application number: **94101602.4**

(22) Date of filing: **03.02.1994**

(54) **Latex paints with microemulsion modifier and process for their preparation**

Latex-Anstrichmittel mit Mikroemulsions-Modifikator und Verfahren zu ihrer Herstellung

Peinture latex avec modificateur microémulsionné et procédé pour fabriquer la même

(84) Designated Contracting States:
**BE DE ES FR GB IT**

(30) Priority: **18.02.1993 US 19633**
**16.12.1993 US 167187**
**27.12.1993 US 173069**
**02.09.1993 US 115109**

(43) Date of publication of application:
**24.08.1994 Bulletin 1994/34**

(73) Proprietor: **THE GLIDDEN COMPANY**
**Cleveland Ohio 44115 (US)**

(72) Inventors:
• **Craun, Gary Pierce**
**Berea, Ohio 44017 (US)**
• **Rosekelly, George Stephne**
**Lakewood, Ohio 44107 (US)**
• **Floyd, Frederick Louis**
**Silver Springs, Maryland 20910 (US)**

(74) Representative: **Cooper, Alan Victor et al**
**Patents and Trade Marks Section**
**Legal Affairs Department**
**ICI Paints**
**Wexham Road**
**Slough, Berkshire SL2 5DS (GB)**

(56) References cited:
**EP-A- 0 401 565**

• **EL-NOKALY 'polymer association structures' ,
ACS , NEW ORLEANS US , XPBOOK: EL-N *
chapter 7, "Preparation of microlatex with
functionalized polyesters as surfactants", F.
Cuirassier et al. * page 100 - page 115 ***

**Description**

This invention pertains to air dry emulsion paints based on emulsion polymeric binders and more particularly to odour-free, consumer latex paints free of polluting offensive odouriferous coalescing solvents.

BACKGROUND OF THE INVENTION

Paint coatings are surface protective coatings applied to substrates, dried to form continuous films for decorative purposes as well as to protect the substrate. Consumer paint coatings are air-drying aqueous coatings applied at ambient temperatures, primarily to architectural interior or exterior surfaces, where the coatings are sufficiently fluid to flow out, form a continuous paint film, and dry at ambient temperatures to protect the substrate surface.

In contrast, automotive paint coating procedures ensure sufficient flow-out to form a continuous film by baking the coating at elevated temperatures, (typically 80 to 150°C, see EP 0 401 565A page 8 lines 55 to 56), but of course such baking is not possible when painting buildings.

A paint coating ordinarily comprises an organic polymeric binder, pigments, and various paint additives. In dried paint films, the polymeric binder functions as a binder for the pigments and provides adhesion of the dried paint film to the substrate. The pigments may be organic or inorganic and functionally contribute to opacity and color in addition to durability and hardness, although some paint coatings contain little or no opacifying pigments and are described as clear coatings. The manufacture of paint coatings involves the preparation of a polymeric binder, mixing of component materials, grinding of pigments in a dispersant medium, and thinning to commercial standards.

Latex paints for the consumer market ordinarily are based on polymeric binders prepared by emulsion polymerization of ethylenic monomers. A typical consumer latex paint binder contains a vinyl acetate copolymer consisting of polymerized vinyl acetate (80%) and butyl acrylate (20%). The hardness of the latex polymer must be balanced to permit drying and film formation at low application temperatures, which requires soft polymer units, while at the same time the polymer must be hard enough in the final film to provide resistance properties which requires hard polymer units. This is conventionally accomplished by designing a latex polymer with a moderately elevated Tg (glass transition temperature) but then lowering the Tg temporarily with a volatile coalescing solvent. Coalescing solvents function to externally and temporarily plasticize the latex polymer for time sufficient to develop film formation, but then diffuse out of the coalesced film after film formation, which permits film formation and subsequent development of the desired film hardness by the volatilization of the coalescent. Internal plasticization is based on coreaction of soft monomers with hard monomers to form a polymeric copolymer binder, such as 80/20 vinyl acetate/butyl acrylate, to obtain the desired film forming characteristics. If a lower Tg copolymer is used without a coalescing solvent, higher levels of soft comonomer are required leading to lower Tg polymer, and, hence, the final dried film would be undesirably soft, excessively tacky, readily stain, and readily pick up dirt. Formulators of automotive paint coatings (such as those disclosed by EP 0 401 565A) do not have to concern themselves with excessive softness, tackiness or stain or dirt pick-up, because the use of baking at elevated temperatures enables them to use polymeric binders of high Tg.

A significant source of residual odour in latex consumer paints is directly due to the coalescing solvent. Coalescing solvents are typically linear (or slightly branched) glycol ethers and esters of 7 to 12 carbon atoms in length, which have boiling points typically above 200°C, and solubility parameters appropriate for the latex of interest. One typical coalescing solvent ordinarily contained in commercial latex paints is 2,2,4-trimethylpentanediol monoisobutyrate (Texanol® Eastman Chemical Co.). The odour associated with the gradual volatilization of this solvent is considered objectionable by consumers. Quite often the odour lingers for days or weeks after the paint is applied and dried. All useful coalescing solvents are volatile and have similar objectionable characteristics. An additional deficiency in conventional exterior latex paints is the decline in crack resistance of the dried paint film approximately proportional to the evaporation of the coalescing solvent. While better coalescing solvents have a retention time of about one year in dried paint films, cracking starts to progressively appear after one year in dried paint films. Hence, any elimination of coalescing solvents and attendant objectionable odours, along with air pollution caused by volatile organic compounds (VOC), and film cracking deficiencies would represent both a technical and marketing advance in the state of the art of consumer latex paints.

In polymer technologies unrelated to air-dry vinyl acetate latex paints, preformed polymers have been dispersed into monomers and emulsified in water, whereupon the monomers are then polymerized, such as disclosed in U.S. 4,373,054 pertaining to cathodic electrocoating, or in U.S. 4,313,073 pertaining to alkyd prepolymers; U.S. 4,588,757 pertaining to laminating adhesives, or in U.S. 3,953,386 and U.S. 4,011,388 pertaining to aqueous emulsion blends containing cellulosic ester/acrylic polymers. In addition, Chapter 7 of ACS Symposium Series 384 (published by the American Chemical Society Washington DC in 1989) discloses coating compositions suitable for various uses (including paints) where the compositions are heat treated after application followed volatilisation of amine (see page 101 lines 27 to 29). The coating compositions are 5 made by the copolymerisation of styrene and acrylic monomers in the presence of an aqueous dispersion of polyester particles. EP 0 401 565A discloses automotive coating compositions which are baked at at least 80°C after application to a substrate. The coatings may be made by dispensing for example vinyl or acrylic monomers, together with particulate polyurethanes or polyesters in water and then polymerising to produce a polymeric binder of the type used in painting motor vehicles where a baking process is employed. The polyurethane or polyester is adapted to bind it into the coating composition during the heating/curing process, whereby it is retained in the dried coating.

It now has been found that certain non-volatile softening oligomeric modifiers compatible with an aqueous emulsion addition copolymer binder in a consumer latex paint can be retained in the dried paint film permanently, without the need to chemically bind the modifier into the film.

Accordingly, this invention provides an aqueous coating composition including an emulsion polymerised polymeric binder having a Tg below 20°C which binder contains an addition copolymer of aqueous polymerised ethylenic monomers wherein the binder contains 3 to 70% of a polyurethane, a polyester and/or a polyester-polyurethane copolymer oligomer modifier having a molecular weight between 200 and 20,000 and a Tg below -20°C and wherein the oligomer modifier is present in the aqueous composition in a micro-emulsion of droplets having a droplet size of less than 10 microns, characterised in that the oligomer modifier has a Tg below -20°C, whereby the coating composition is capable of air-drying at ambient temperatures. Softening oligomer modifiers of this invention can be incorporated into the paint without co-reacting with (ie chemically bonding to) the polymeric binder and the oligomer will be retained permanently in the final paint film. Hence, the paint will not generate an odour while drying nor emit a residual odour from the dried paint film or otherwise emit VOC's. The softening oligomeric modifiers of this invention externally modify the emulsion copolymer matrix polymer, apparently by functioning by a chain-spacing mechanism to soften the matrix copolymers, whereby the oligomeric modifiers provide low temperature film formation and tack-free films less prone to soiling at a given hardness and/or flexibility than ordinarily possible. Particularly preferred are emulsion copolymer matrix polymers comprising polyvinyl acetate copolymers. A further advantage of this invention enables the use of essentially all hard polymer units of polyvinyl acetate without the need for internal plasticization (coreaction) with soft butyl acrylate polymeric units.

The present invention is based on a softening oligomeric modifiers having a low and narrow molecular weight range where the oligomer will not subsequently diffuse out of the matrix polymer when properly dispersed into the polymeric binder phase. Preferred oligomers are non-volatile oligomers having a molecular weight between about 300 and 10,000. Lower molecular weight compounds tend to be volatile and cause excessive plasticizer migration while higher molecular weight polymers lose low temperature film-forming and softening effects, although molecular weights above 10,000 and in some instances up to 20,000 can be used with softer matrix polymers.

According to a preferred process of this invention, a low molecular weight oligomer can be surprisingly dispersed by high shear into water under heat and pressure to provide a submicron emulsified aqueous mixture of oligomer stably dispersed in water. The micro-emulsified mixture in turn, can be readily mixed with various emulsion latex polymers to provide a stable mixture of dissimilar emulsions. It was found that micro-emulsions of oligomer in water having an average droplet size less than about one micron enable the oligomer particle to migrate out of the oligomer droplets then through the aqueous phase and into surrounding latex polymer particles if the oligomer is sufficiently low molecular weight oligomer. The lowest molecular weight oligomer particles move faster due to micro small size and have a small but finite solubility in water. A medium range molecular weight fraction of the low molecular weight oligomers move through the water phase into the latex particles at a slower rate extending over several hours or even a few days. The higher molecular weight fraction of the low molecular weight oligomer have essentially zero solubility in water and invariably remain within the oligomer emulsion droplets until a paint film dries, at which time these oligomer particles physically contact the latex particles and eventually migrate into the latex polymer particles during drying.

According to a desirable process of this invention, a compatible organic solution of oligomeric modifier in ethylenic monomer can be subjected to high energy shear to prepare a sub-micron size organic phase dispersed into water. Subsequent polymerization of the micronized monomer droplets produces a softened modified latex very different from conventional emulsion or suspension polymerization polymers. The micro aqueous suspension polymerization is generally necessary with the oligomeric modifiers to accomplish the required sub-micron aqueous emulsification of the monomer containing the dissolved oligomeric modifier, since the oligomer will not readily diffuse during polymerization from particle to particle across the aqueous phase.

The principal advantage of this invention is the elimination of the odour and VOC associated with volatile coalescent solvents which are intentionally volatile and intended to migrate out of the dried paint film. An additional advantage pertains to dried paint films exhibiting superior toughness obtained through the use of a hard polyvinyl acetate matrix polymer balanced with the oligomeric modifier to accommodate softening through the external addition of softening modifier while retaining the desired dried film hardness. A further advantage pertains to lower net cost for both interior and exterior paints since high cost soft monomers can be avoided, volatile coalescing agents can be eliminated and binder volume can be increased by using a permanent non-volatile softening oligomer instead of a volatile coalescent. The resulting dried paint films exhibit a superior balance of hardness and flexibility while maintaining long term flexibility. These and other advantages of this invention will become more apparent by referring to the detailed description and illustrative examples.

## SUMMARY OF THE INVENTION

Briefly, the air-dry emulsion paint of this invention contains an oligomeric modified binder of polymerized ethylenic monomers to provide an aqueous emulsion addition copolymer binder externally modified with a non-reactive, low molecular weight, compatible oligomer selected from a polyester-urethane copolymer, a polyether-urethane copolymer, a polyurethane-urea copolymer, a polyester-amide or a polyester, where between about 1% and desirably between 3% and 70% by weight of the binder comprises softening oligomer. Preferred emulsion addition copolymers comprise vinyl acetate copolymers.

In accordance with the preferred process of this invention, low molecular weight oligomer having a preferred number average molecular weight between about 300 and 5,000 is stably dispersed into water assisted with surfactants by heating a mixture of oligomer and water containing by weight between about 40% and 70% oligomer at temperatures preferably between about 45°C and 60°C, and then micronizing the heated oligomer water mixture under substantial shear to provide the stable microemulsion of oligomer dispersed aqueous emulsion having an average microemulsion droplet size less than about ten microns. The resulting oligomeric preformed microemulsion can be blended with a wide variety of vinyl acetate or acrylic latex polymers to provide a polymeric binder for paint coatings.

In accordance with a desirable process of this invention, the low molecular weight softening oligomer has a preferred number average molecular weight between 300 and 10,000 and is effectively dissolved in ethylenically unsaturated monomer to form a compatible organic mixture before forming the aqueous emulsion addition matrix polymer containing between 3% and 50% by weight oligomer. The organic mixture is dispersed into water by high shear, whereupon the ethylenic monomer is polymerized to produce a stabilized latex containing the low molecular weight oligomeric modifier.

## DETAILED DESCRIPTION OF THE INVENTION

The air-dry emulsion paint of this invention comprises an emulsion polymer comprising an aqueous emulsion addition copolymer polymeric binder containing a non-volatile oligomeric modifier.

Suitable oligomeric modifiers in accordance with this invention comprise low molecular weight oligomers including urethanes consisting of polyester-urethane copolymers, polyether-urethane copolymers, polyurethane-urea copolymers; polyester polymer comprising polyester-amides and polyester polymers. The foregoing softening oligomeric modifiers function as effective external modifiers for latex emulsion paints, and particularly for the preferred polyvinylacetate binder for interior latex paints.

Useful non-volatile oligomeric modifiers have a number average molecular weight range between about 200 and 20,000, preferably between 300 and 10,000 and most preferably between 300 and 5,000. A preferred characterization of the oligomer modifier is in units of degree of polymerization (DP Units) which refers to the repeating monomer units without regard to molecular weight although the molecular weight is maintained relatively low as indicated. DP units defines the approximate chain length of the oligomers without regard to side units. The oligomeric modifier of this invention should have a DP between about 2 and 100, preferably between 2 and 50 and most preferably between 2 and 20 DP units. Useful oligomer modifiers have low Tg's to sufficiently impart a plasticizing effect on the matrix emulsion copolymer. Useful Tg's of the oligomeric modifier measured by Differential Scanning Calorimetry (DSC) at 10°C/minute scan rate are less than -20°, preferably less than -40°C and most preferably below -50°C. The level of oligomer modifier needed can vary considerably in the final latex. The level required depends on the inherent softening efficiency of the oligomer (estimated by its Tg) and the Tg of the matrix (parent) polymer. The Fox equation is useful for estimating the level needed:

$$1/T_g \text{ (mix)} = (W_p/T_{g, p}) + (W_m/T_{g, m})$$

where

$T_g$ (mix) = glass transition temperature of the modified polymer (which is a mixture);
$W_p$, $W_m$ = weight fraction of the parent (matrix) polymer and oligomeric modifier, respectively;
$T_{g, p}$ ; $T_{g, m}$ = glass transition temperature of the parent (matrix) polymer and the oligomeric modifier, respectively.

Thus, the level of oligomeric modifier required is directly related to the Tg of the parent matrix polymer, and inversely related to the Tg of the oligomer. Hence, the lower oligomer Tg will more efficiently soften the emulsion addition matrix polymer provided the oligomer and matrix polymer are compatible.

Compatibility of a polymeric mixture is commonly said to exist when the mixture remains substantially optically clear, which indicates the two components are mutually soluble. In this invention, compatibility is intended to mean that the oligomeric modifier is soluble in the matrix polymer in the solid state. Complete compatibility is believed to exist when these conditions are met: in the solid state the mixture has a Tg (DSC, DMA) intermediate between the Tg's of the two components; the absence of component Tg transitions; the mixture Tg is smoothly dependent on level of modifier; and the mixture Tg follows a mixing rule such as the Fox equation. Tg's of mixtures depend on the Tg's of the two components, concentrations of the two components, and compatibility of the two components. The present invention pertains to substantially compatible components.

In accordance with this invention, low molecular weight polyurethane oligomers such as polyester-urethanes, polyether-urethanes, polyether urethane-urea copolymers, and polyester polymers including polyester-amide copolymers can be utilized as external softening oligomers in the polyvinyl acetate binder matrix polymers. Useful polyurethane copolymers typically contain urethane groups in the polymer backbone and are produced by reacting excess equivalents of diol or polyol with lesser equivalents of di- or polyisocyanate. The polyisocyanates can be di- or triisocyanates such as for example 2,4- and 2,6- toluene diisocyanate, phenylene diisocyanate; hexamethylene or tetramethylene diisocyanate, 1,5-naphthalene diisocyanate, ethylene or propylene diisocyanate, trimethylene or triphenyl or triphenylsulfone triisocyanate, and similar di- or triisocyanates. The polyisocyanate can be generally selected from the group of aliphatic, cyclo-aliphatic and aromatic polyisocyanates such as for example hexamethylene 1,6-diisocyanate, isophorone diisocyanate, diisocyanate, 1,4-dimethyl cyclohexane, diphenylmethane diisocyanate 2,4-toluene diisocyanate, 2,6-toluene diisocyanate and mixtures thereof, polymethylene polyphenyl polyisocyanate.

Polyester-urethanes can be produced from diols comprising hydroxyl functional polyester polymer prepared by conventional esterification polymerization techniques from the common dicarboxylic acids and dihydroxyl functional reactants. Suitable carboxylic acids include adipic acid, succinic acid and anhydride, azelaic acid, maleic acid and anhydride, and other aliphatic carboxylic acids. Aromatic dicarboxylic acids include isophthalic acid, phthalic acid and anhydride, terephthalic acid, trimelitic anhydride and the like. Lesser amounts of mono-functional acids can be included, such as benzoic acid, 2-ethylhexanoic acid, if desired. Suitable dihydroxy functional materials include ethylene and propylene glycol, dipropylene glycol, diethylene glycol, neopentyl glycol, trimethylol propane, and lesser amounts of mono-functional alcohols such as benzyl alcohol and hexanol, if desired. Polyester prepolymers are generally prepared with excess hydroxyl functionality at molecular weights ranging from about 100 to 10,000 preferably about 200 to 2,000. Polyester prepolymers can be used alone or in combination with polyethers as hydroxyl functional prepolymers. Suitable hydroxyl functional polyether prepolymers include polyethylene oxide, polypropylene oxide, polybutylene oxide, and tetramethylene oxide where the polyether prepolymers have a molecular weight between about 100 and 10,000. Preferred polyethers used in the preferred process have a number average molecular weight between about 300 and 5,000.

The polyesters and/or polyether prepolymers are then reacted with diisocyanate to advance the prepolymers to a molecular weight of about 200 to 20,000 and preferably between 300 and 10,000, and most preferably between 300 and 5,000, to form polyester or polyether urethane oligomers of this invention. Diisocyanates are used preferably at an equivalent ratio of about 1 isocyanate group to 1.1 to 10 hydroxyl groups. Ratios of about 1.5 to 3 hydroxyl groups per isocyanate group are preferred. Preferred diisocyanates include toluene diisocyanate, isophorone diisocyanate, 1,6-hexane diisocyanate, diphenylmethane diisocyanate, and the like. Catalysts such as dibutyltindilaurate, tin oxide and the like can be used to increase the isocyanate reaction rate with the hydroxyl polyester or polyether prepolymer at temperatures of about 30 to 120°C and preferably at about 70° to 100°C.

The polyester or polyether urethane copolymers can be further extended with diamine or polyamine, if desired, to produce polyurethane-urea copolymer useful as a softening oligomer modifier in polyvinyl acetate binder matrix polymers in accordance with this invention. In this regard, primary diamine or polyamine can be added to an isocyanate terminated polyurethane intermediate containing unreacted pendant or terminal isocyanate groups obtained by reacting excess equivalents of isocyanate relative to hydroxyl equivalents in the polyester or polyether prepolymers. The primary diamines readily react with the isocyanate functional intermediate to chain extend the polyurethane to a polyurethane-urea of a higher molecular weight. Alternatively amine can be prereacted with the diisocyanate prior to reacting with polyol. Suitable primary amines for chain extension include hexamethylene diamine, 2-methyl-pentanediamine and similar aliphatic diamines. Polyester and polyether urethane copolymers or polyurethanes extended with diamine to form polyurethane-ureas exhibit excellent compatibility with vinyl acetate monomers as well as the resulting polyvinylacetate polymers. Polyurethane intermediate molecular weights before chain extension can be between 400 and 10,000 while after chain extension with the diamine the final molecular weight of the polyurethane-urea can be between about 800 and 20,000. Preferred polyurethanes used in the preferred process exhibit intermediate molecular weights before chain extension between 200 and 2,000 with chain extended molecular weights between 300 and 5,000.

A particularly preferred non-reactive oligomer useful as a softening oligomer modifier in this invention comprises a polyester polymer. In accordance with this invention, a low molecular weight ester or polyester can be dissolved in the ethylenically unsaturated monomer, suspended in water, and the aqueous suspension micronized prior to polymerization of the monomers. Useful polyester oligomers comprise esterification reaction products of diols with dicarboxylic acids or a functional equivalent with minor amounts of polyol or polyacid if desired, to produce a low acid number polyester polymer. Suitable esters and polyesters for blending have molecular weights between about 200 and 20,000, preferably less than 10,000, and include the linear and branched esters and polyesters formed from saturated dicarboxylic acids such as adipic acid, glutaric acid, succinic acid, and other such linear aliphatic acids, acid anhydrides, and lower alkyl esters thereof; phthalic acid, isophthalic acid, trimellitic anhydride, and other aromatic acids, acid anhydrides, and lower alkyl esters thereof; monoacids such as benzoic acid, 2-ethylhexanoic acid and other aromatic and aliphatic acids, which if desired, may be used in minor amounts to end cap and limit molecular weight. Minor amounts of unsaturated dicarboxylic acids such as fumaric or maleic acid can be included, if desired, to enhance grafting with polymerized ethylenic monomers, which promotes compatibility and permanence of the oligomer in the matrix polyvinyl acetate polymer.

Diol functional materials include diethylene glycol, neopentyl glycol, 2-methyl pentane diol, ethylene glycol, butylene glycol, propylene glycol, dipropylene glycol and the like; or mono-functional glycol ether groups, such as butylcellosolve, butyl carbitol, and the like; as well as hydroxy acids such as lactic acid, and lesser amounts of triols and polyols, such as trimethylol propane and ethane, and pentaerythritol. Acids can be used in carboxyl form, anhydride form, or an ester form, such as the methyl ester form, with the above diols to form linear and branched polyesters desirably having an Acid No. below about 20, and a molecular weight between 200 and 20,000, desirably between 300 and 10,000, and preferably between about 300 and 5,000. Polyesters of diethylene or dipropylene glycol with adipic acid are preferred. The low molecular weight esters and polyesters lower the Tg of the blend and can eliminate the need for expensive comonomers such as butyl acrylate. Thus, low molecular weight esters and polyesters can be effectively used to provide excellent, non-tacky, paint films without the inclusion of coalescing solvents.

Polyester amide oligomeric modifiers are formed by the reaction of diols and diamines with dicarboxylic acids or esters. In a preferred process, methyl esters of adipic, glutaric, isophthalic or other common dicarboxylic acids are transesterified with diols and diamines at about 150°C to 250°C in the presence of common esterification catalysts such as butylstanoic acid. Typically greater amounts of diols, such as diethylene and dipropylene glycol, neopentyl glycol and the like are used with lesser amounts of diamines, such as 1,6-hexanediamine, 2-methyl pentanediamine, or the longer chain amines (e.g. Jeffamine-Texaco). Lesser amounts of monoacids, monoesters, alcohols and amines, or polyacid, polyols, or polyamines can be added. if desired.

In accordance with preferred aspects of this invention, it has been found that very low molecular weight oligomer modifier can be dispersed into water under high shear at temperatures between about 20°C and 100°C and preferably between about 45°C and 60°C, where the oligomer weight percent and the oligomer weight in the resulting emulsion is between about 40% and 70% by weight and most preferably between about 55% and 65% by weight oligomer. It has been found that high shear of the oligomer in water under these parameters produces micronized emulsion droplets having a micronized particle size below 10 microns will enable the low molecular weight oligomer to diffuse from the preformed emulsion into a preformed latex emulsion polymer. Preferred microemulsions have an average particle droplet size between 0.1 and 1 micron. The rate of diffusion increases considerably by small preemulsion particles where the rate of diffusion is particularly fast and efficient for preformed emulsions having a particle size preferably between 0.1 and 1 micron. It has been found that efficient and complete diffusion of the low molecular weight oligomer particles can be achieved with preferred submicron emulsion particles, whereby oligomer present sufficiently diffuses into the latex particles to avoid any residual tackiness which may result from higher molecular weight residues that could not readily diffuse into the latex matrix polymer particles. Accordingly, it has been found that oligomer having a more preferred number average molecular weight below 1500 and most preferably between 500 and 1000 not only increase the quantity of oligomer diffusion, but increases diffusion efficiency into the latex matrix particles and advantageously avoids tacky film forming polymer binders. Thus, direct micronized emulsification of the oligomer into water enables the micronized preemulsion to be easily blended with a wide variety of latex emulsion matrix polymers. The resulting diffused oligomer modified latex matrix polymer comprises a plasticized latex emulsion polymer containing modifying oligomer but contains no volatile organic matter. Paint films are capable of achieving both low temperature film formation below about 10°C and tack free surfaces at ambient room temperature air dry conditions.

In accordance with this aspect of the invention, the three-dimensional solubility parameters of the oligomeric modifier must match well with that of the latex polymer in order for plasticization to occur, which may describe a boundary for this invention in term of hydrophobicity. For example, a butyl acrylate/styrene copolymer latex would require a much more hydrophobic modifier than a vinyl acetate homopolymer. In turn, the ability of the oligomeric modifier to diffuse from the microemulsion to the latex polymer should decline with decreasing hydrophobicity. This could be counteracted to some extent by reducing molecular weight although oligomeric molecular weight above about 300 are needed to maintain permanency and zero VOC conditions. Preferred oligomers are non-volatile oligomers having a molecular weight between about 300 and 5,000. Lower molecular weight compounds tend to be volatile and cause excessive plasticizer migration while higher molecular weight polymers lose low temperature film-forming and softening effects.

The oligomer preemulsion can be formed in accordance with the preferred process of the invention by forming a normally incompatible mixture of water and oligomer comprising between about 40% and 70% by weight oligomer. The oligomer can be suspended in water with mixing to form a coarse suspension using the common latex surfactants or stabilizers, such as the sulfosuccinates, the sulfates, various ethoxylated phenols, and the like. The coarse suspension is then micronized under very high shear to very fine particle size emulsion droplets of average size of less than 10 microns, preferably less than 1 micron, and most preferably less than 0.7 micron. High mechanical shear and/or ultrasound as well as other high shear devices can be used to form the microemulsion. Grinding the oligomeric modifier into an aqueous mixture of pigments is a satisfactory method of forming the micro-preemulsion. Suitable surfactants are used at about 0.1% to 5% by weight (based on solids) and include the nonionic surfactants such as various ethoxylated phenols, block copolymers of ethylene oxide and propylene oxide, anionic surfactants such as sulfosuccinates, sulfates, and sulfonates, and the like (sulfosuccinates such as hexyl, octyl, and hexadecyl sulfosuccinate are preferred). Suitable surfactants include the various sulfosuccinates such as hexyl, octyl, and hexadecyl sulfosuccinate, the various alkyl and alkyl-aromatic sulfates and sulfonates, as well as the various nonionic ethylene oxide surfactants. In accordance with this aspect of the invention, the modifying oligomers are dispersed into water and micronized into a microemulsion, whereupon the oligomer micro-preemulsion can be mixed with a preformed emulsion latex copolymer of copolymerized ethylenic monomers.

In accordance with another aspect of this invention, the oligomers can be solubilized in ethylenic monomer, then dispersed into water and micronized into a microemulsion. The ethylenic monomers are then polymerized to produce a polymeric binder comprising emulsion polymerized ethylenic monomer. The preferred ethylenic monomer is vinyl acetate, although other ethylenic monomers can be copolymerized with the vinyl acetate monomer to produce a preferred copolymer containing by weight less than 60% and preferably less than 30% and most preferably less than 20% other ethylenic monomer. The oligomers can be dissolved in the ethylenically unsaturated monomers to form a fluid organic solution containing above 1% and desirably between about 3% and 50% and preferably between 10% and 25% by weight oligomer based on the weight of the organic monomer solution. This organic mixture of oligomer and monomer is then suspended in water with high shear mixing to form a coarse suspension using the common latex surfactants as stabilizers. Suitable surfactants are used at about 0.1 to 5% by weight (based on solids) and include the nonionic surfactants such as various ethoxylated phenols, block copolymers of ethylene oxide and propylene oxide, anionic surfactants such as sulfosuccinates, sulfates, and sulfonates, and the like (sulfosuccinates such as hexyl, octyl, and hexadecyl sulfosuccinate are preferred). The coarse suspension is then micronized to very fine particle size emulsion droplets of average size of less than 5 microns, preferably less than 1 micron, and most preferably less than 0.7 micron. High mechanical shear and/or ultrasound can be used to form the microemulsion. Typical additional ingredients include buffers, acrylic acid, sodium salt of acrylamido methyl propane sulfonic acid (NaAMPS) ordinarily added at 0.1% to 5% by weight levels based on solids. Initiators such as persulfate, peroxide, and azo initiators can be added before or after suspension of the organic mixture in water. Redox catalysts can be added if desired. Polymerization can be accomplished by simply raising the suspension temperature to about 70°C to 80°C using persulfate initiators. Initial reflux of vinyl acetate will be at 67°C, but the temperature will rise with monomer polymerization conversion. Additional ethylenic monomer can be added, preferably after the preformed suspended addition copolymer emulsion and other monomer have polymerized.

In accordance with either process of this invention, the emulsion polymerized ethylenic monomers produce a matrix polymer of polymerized monomer where the most preferred polymeric binders comprise homopolymers of vinyl acetate. On a weight basis, the polymeric binders can comprise between 40% and 100% polymerized vinyl acetate with the balance being other ethylenic monomers. Preferred polymeric binders containing at least 70% by weight polymerized vinyl acetate and most preferred 80% to 100% vinyl acetate. However, exterior latex paints based on acrylic emulsion matrix copolymers predominantly of copolymerized acrylic and styrene monomers comprising between 50% and 100% by weight acrylic monomers are particularly useful for exterior air dry latex paints. Vinyl acetate copolymers are useful for exterior paints although acrylic copolymer are preferred.

In either vinyl acetate or acrylic copolymers, other copolymerizable ethylenic monomers comprise ethylenically unsaturated monomers containing carbon-to-carbon, allylic monomers, acrylamide monomers, and mono- and dicarboxylic unsaturated acids. Vinyl esters include vinyl propionate, vinyl laurate, vinyl decanoate, vinyl butyrates, vinyl benzoates, vinyl isopropyl acetates and similar vinyl esters; vinyl aliphatic hydrocarbon monomers include vinyl chloride and vinylidene chloride as well as alpha olefins such as ethylene, propylene, isobutylene, as well as conjugated dienes such as 1,3 butadiene, methyl-2-butadiene, 1,3-piperylene, 2,3-dimethyl butadiene, isoprene, cyclohexane, cyclopentadiene, and dicyclopentadiene; and vinyl alkyl ethers include methyl vinyl ether, isopropyl vinyl ether, n-butyl vinyl ether, and isobutyl vinyl ether. Acrylic monomers include lower alkyl esters of acrylic or methacrylic acid having an alkyl ester portion containing between 1 to 12 carbon atoms as well as aromatic derivatives of acrylic and methacrylic acid. Useful acrylic monomers include, for example, acrylic and methacrylic acid, methyl acrylate and methacrylate, ethyl acrylate and methacrylate, butyl acrylate and methacrylate, propyl acrylate and methacrylate, 2-ethyl hexyl acrylate and methacrylate, cyclohexyl acrylate and methacrylate, decyl acrylate and methacrylate, isodecyl acrylate and methacrylate, benzyl acrylate and methacrylate, and various reaction products such as butyl, phenyl, and cresyl glycidyl ethers reacted with acrylic and methacrylic acids, hydroxyl alkyl acrylates and methacrylates such as hydroxyethyl and hydroxypropyl acrylates and methacrylates, amino acrylates, methacrylates as well as acrylic acids such as acrylic and methacrylic acid, ethacrylic acid, alpha-chloroacrylic acid, alpha-cycanoacrylic acid, crotonic acid, beta-acryloxy propionic acid, and beta-styrl acrylic acid.

Particularly preferred comonomers include acrylates such as methyl, ethyl, propyl, butyl (linear and branched), 2-ethyl hexyl; methacrylates such as methyl, ethyl, propyl, butyl (linear and branched), 2-ethyl hexyl; vinyl esters such as acetate, proprionate, butyrate, pentanoate (neo 5), nonanoate (neo 9), 2-ethyl hexanoate, decanoate (neo 10); and other ethylenic monomers such as ethylene, vinyl chloride, vinylidene chloride and butadiene. Very minor amounts of divinyl monomers such as divinyl benzene can be copolymerized if desired. For exterior latex paints, the matrix copolymer ordinarily comprises copolymerized acrylic monomers where the acrylic copolymer content can be between about 40% and 100% by weight of the copolymer.

The preferred matrix copolymer comprises emulsion polymerized vinyl acetate monomer to produce a matrix polymeric binder of polymerized vinyl acetate where the most preferred polymeric binders comprise homopolymers of vinyl acetate. On a weight basis, the preferred polymeric binders comprise between 40% and 100% polymerized vinyl acetate with the balance being other ethylenic monomers. Preferred polymeric binders contain at least 70% by weight polymerized vinyl acetate and most preferred 80% to 100% vinyl acetate. The number average molecular weight of the polymeric vinyl acetate binders should be between about 30,000 and 10,000,000 and preferably between 50,000 and 1,000,000 as measured by GPC (gel permeation chromatography) according to ASTM D3016-78, D3536-76, and D3593-80. The Tg or softening point of the modified polymeric binder particles should be less than 20°C as measured by differential scanning calorimetry, preferably less than 10°C, most preferably <5°C. The MFT (minimum film formation temperature) is an alternative measure of polymer film formation determined on the neat latex on a temperature gradient temperature bar, and is typically a few degrees higher than the Tg of the latex. MFT should be less than 20°C, preferably less than 15°C, most preferred less than 10°C. The LTFF (low temperature film formation) is a film forming test run on the fully formulated paint. LTFF typically is reported as the lowest temperature at which no cracking is observed, or alternatively, the amount of coalescent or oligomer needed to achieve 5°C (40°F)failure-free coatings. LTFF should be less than 10°C (50°F), preferably less than 5°C (40°F). The distinction with LTFF is that other paint ingredients may have either an elevating influence (fillers, pigments) or depressing (surfactants, incidental solvents in additives) effect on LTFF relative to the MFT, which is measured on the latex alone. In turn, the MFT is measured from the wet state, and therefore includes the plasticizing effect of water, while the Tg is measured on an anhydrous sample of latex film, which does not include the water plasticizing effect.

Latex paints are formulated to achieve LTFF of less than 10°C (50°F), preferably less than 5°C (40°F). It is also necessary for the final dried films to not be tacky at normal use temperatures 15°C to 43°C (60 to 110°F). The polymeric binder contains between about 5% and 45% by weight softening oligomer with the balance being copolymer matrix polymer.

The ethylenic monomers can be polymerized in an aqueous polymerization medium by adding other emulsion polymerization ingredients. Initiators can include for example, typical free radical and redox types such as hydrogen peroxide, t-butyl hydroperoxide, di-t-butyl peroxide, benzoyl peroxide, benzoyl hydroperoxide, 2,4-dichlorobenzoyl peroxide, t-butyl peracetate, azobisisobutyronitrile, ammonium persulfate, sodium persulfate, potassium persulfate, sodium perphosphate, potassium perphosphate, isopropyl peroxycarbonate, and redox initiators such as sodium persulfate-sodium formaldehyde sulfoxylate, cumene hydroperoxide-sodium metabisulfite, potassium persulfate-sodium bisulfite, cumene hydroperoxide-iron (II) sulfate. Redox systems consist of oxidants and reductants, which can be mixed in any pair. Transition metals such as iron can be used as accelerators for initiators for redox couples. The polymerization initiators are usually added in amounts between about 0.1 to 2 weight percent based on the monomer additions.

Suitable anionic surfactants include for example, salts of fatty acids such as sodium and potassium salts of stearic, palmetic, oleic, lauric, and tall oil acids, salts of sulfated fatty alcohols, salts of phosphoric acid esters of polyethylated long chain alcohols and phenols. Preferred anionic surfactants include for example, alkylbenzene sulfonate salts such as sodium dodecylbenzene sulfonate and salts of hexyl, octyl, and higher alkyl diesters of 2-sulfosuccinic acid. Suitable non-ionic surfactants include polyoxyethylene glycols reacted with a lyophilic compound, ethylene oxide condensation products reacted with t-octylphenol or nonylphenol and known as "Triton" surfactants, polymerized oxyethylene (Igepal-CA), ethylene oxide reacted with organic acids (Emulfor), or organic acid reacted with polyoxyamylene ether of stearic or oleic acid esters (Tweens).

A paint coating composition can be produced by combining the externally modified emulsion polymer of this invention with pigments and other paint additives in a dispersing mill such as a Cowles disperser. A pigment dispersion can be preformed consisting of a dispersant and pigments on a disperser mill, a sand mill, a pebble mill, a roller mill, a ball mill or similar conventional grinding mill for milling the mineral pigments into the dispersion medium. The premix can then be combined under low shear with the polymeric binder of this invention and other paint additives as desired. Useful mineral pigments ordinarily include opacifying pigments such as titanium dioxide, zinc oxide, titanium calcium, as well as tinting pigments such as carbon black, yellow oxides, brown oxides, tan oxides, raw and burnt sienna or umber, chromium oxide green, phthalocyanine green, phthalonitrile blue, ultramarine blue, cadmium pigments, chromium pigments, and the like. Filler pigments such as clay, silica, talc, mica, wollastonite, wood flower, barium sulfate, calcium carbonate and the like can be added.

Historically, prior art paints achieved a balance of properties by making the latex slightly too hard for LTFF to achieve the tack-free character, and then temporarily softening the binder polymer with a coalescing solvent to achieve the desired LTFF. However, by using non-volatile, external softening oligomers in accordance with this invention, the historical relationship between Tg (or MFT) and LTFF in the final paint can be changed such that both film formation and tack free character are simultaneously obtained without the need for a volatile coalescing solvent. The softening oligomer is permanent by design and will not volatilize out of the paint film.

The merits of this invention are further supported by the following illustrative examples.

Comparative Examples A and B

A vinyl acetate and butyl acrylate 80/20 copolymer (Ex. A) and a vinyl acetate/butyl acrylate 60/40 copolymer (Ex. B) were produced from the following ingredients.

|    | Ex. A | Ex. B |                   |
|----|-------|-------|-------------------|
| a) | 2022 g | 2022 g | deionized water |
|    | 7.2 g | 7.2 g | MM-80 |
|    | 4.3 g | 4.3 g | ammonium acetate |
|    | 5.4 g | 5.4 g | A246L |
|    |       |       |                   |
| b) | 28 g | 28 g | vinyl acetate |
|    | 7.0 g | 7.0 g | butyl acrylate |
|    | 0.7 g | 0.7 g | ammonium persulfate |
|    |       |       |                   |
| c) | 1360 g | 1034 g | vinyl acetate |
|    | 340 g | 677 g | butyl acrylate |
|    | 2.4 g | 2.4 g | acrylic acid |
|    |       |       |                   |
| d) | 5.4 g | 5.4 g | ammonium persulfate |
|    | 21 g | 21 g | A246L |
|    | 135 g | 135 g | deionized water |
|    | 15 g | 15 g | NaAMPS |

Warm (a) to 71°C under nitrogen with good stirring. Add (b) and allow exotherm to die (about 15 minutes). Pump in (c) and (d) in parallel over 5 hours. Hold 1 hour, and cool.

Comparative Example

Comparisons of soft copolymer and coalesced hard copolymer (prior art) with the current invention are as follows.

Prior art. Conventionally, the balance of low temperature film formation and absence of tack at ambient temperature is achieved by utilizing a latex composition with an elevated Tg, to achieve absence of tack, and then temporarily reducing its Tg with a volatile coalescing solvent such as Texanol, to achieve low temperature film formation. While this works well, it also involves the emission of the coalescing solvent into the atmosphere, which contributes odour and air pollution. A typical copolymer composition comprises by weight 80% vinyl acetate and 20% butyl acrylate, as in Example A above. For this experiment, the latex contained coalescing solvent at the level of 6% to achieve a KMFT of 10°C. A film cast with this coalesced latex was non-tacky at room temperature, but emitted volatile solvent to the atmosphere.

Conversely, if one makes a copolymer with a low enough Tg to achieve low temperature film formation (60/40 VA/BA), as in Example B above, the polymer forms a film which is excessively tacky at ambient use temperature. While this would involve no VOC emissions to the atmosphere, the coating involves a commercially unacceptable balance of properties. This soft copolymer achieves a KMFT of 10°C on its own. A film cast from this latex is extremely tacky at room temperature, but emits no solvents to the atmosphere.

Present Invention. In the present invention, the use of a non-volatile external plasticizer accomplishes all three goals simultaneously: low temperature film formation, tack-free behavior at ambient temperatures, and no volatile organic emissions to the atmosphere.

Example 1

A low molecular weight dipropylene-adipate oligomer polyester was synthesized in accordance with the preferred process at a -OH/-COOH equivalent ratio of 1.25 as follows:

    1629.9 grams adipic acid
    1870.1 grams dipropylene glycol
    1.1 grams butyl stannoic acid

The foregoing materials were charged to a flask equipped with a stirrer and heated up to 240°C maximum under nitrogen along with water of reaction removal and held until a final Acid No. of 4 to 8 was obtained based on solids. The resulting polyester had ICI Cone & Plate viscosity 14-18 poise at 30°C, and a number average molecular weight of 800, and a Tg of -50°C.

The foregoing polyester was used to make an oligomeric pre-emulsion comprising by weight 62.5% polyester, 3.6% Triton X405 surfactant (70% active nonyl phenol ethoxylate), and 33.9% deionized water. This corresponds to 4% surfactant based on the weight of polyester. The pre-emulsion was formed by adding the polyester to the water/ surfactant solution with ordinary agitation to form a premix, heating the premix above 45°C to about 60°C, and then passing the heated premix through a Sonic Triplex Model T02-2A-HP ultrasonic emulsifier equipped with a 0.001 square inch orifice at 1000 psi. The resulting mixture was a stable, water dispersed, pre-emulsion of polyester oligomer having an emulsion particle size less than 0.7 microns. The oligomer pre-emulsion was then blended with 80/20 by weight vinyl acetate butyl acrylate copolymer (Example A above) having a Tg = 10°C at the level of 10% polyester based on the weight of oligomer and latex polymer solids or 800 grams latex 56.5% NV was mixed with 77.3 grams of polyester pre-emulsion. Blending of the oligomer pre-emulsion and latex was at room temperature, mixed thoroughly for about one hour, and then was allowed to set at room temperature for about 24 hours without further mixing. The oligomer modified latex provided an excellent semi-gloss latex paint.

Example 2

In a manner similar to Example 1, a low molecular weight polyester prepolymer was prepared at a -OH/-COOH equivalent ratio of 1.186 as follows:

    1675.1 grams adipic acid
    1823.4 grams dipropylene glycol
    0.5 grams triphenyl phosphine
    1.1 grams butyl stannoic acid

The polyester was synthesized at less than 240°C to obtain a 4-8 Acid No. along with a 32-38 poise viscosity at 30°C, a number average molecular weight of 970, and a Tg of -50°C. The oligomer pre-mix was micronized through a Sonolator to an emulsion particle size less than 0.7 microns. The oligomer pre-emulsion was mixed with the 80/20 vinyl acetate butyl acrylate copolymer latex in the manner of Example 1.

Example 3

White semi-gloss latex paints were prepared from any one of the foregoing emulsion polymers described in Examples 1 or 2 from the following ingredients:

PIGMENT GRIND :

| Group | Ingredient | Grams |
|---|---|---|
| A | Water | 151.68 |
| A | Thickener | .50 |
| A | Ammonia (28%) | .01 |
| B | Surfactant | 5.00 |
| C | Defoamer | 2.00 |

(continued)

| Group | Ingredient | Grams |
|---|---|---|
| C | Surfactant | 2.00 |
| D | TiO$_2$ pigment | 145.00 |
| D | Clay extender pigment | 50.00 |

Group A ingredients were added to Cowles dispersing equipment and mixed for 5 minutes. Group B and then C ingredients were added with continued mixing under slow agitation. Group D ingredients were added under high speed agitation and grind for 15 minutes or until a Hegman 5.5 was attained. The foregoing is the grind portion of the paint.

LETDOWN

| Group | Ingredient | Grams |
|---|---|---|
| E | Water | 33.00 |
| F | Water | 33.00 |
| F | Thickener | 3.50 |
| F | Ammonia Hydroxide | .01 |
| G | Preservative | 1.00 |
| H | Defoamer | 5.00 |
| H | Propylene glycol | 40.00 |
| H | Surfactant | 4.50 |
| H | Rheology Modifier (Ex. 1 or 2) | 9.00 |
| H | Surfactant | 3.00 |
| I | Latex (Ex. 1 or 2) | 393.00 |
| I | Opacifier latex | 105.00 |

Group E ingredients were added in separate vessel, followed by Premix F added to E ingredients with slow speed agitation. Group G ingredients were added at slow speed. Premix H ingredients were then added to vessel. Premix I ingredients were mixed for 30 minutes and then added to vessel. The final composition was mixed for 1 hour. The foregoing is the letdown portion of the paint.

LATEX PAINT

The letdowns above were added to the pigment grind above under slow speed agitation and allowed to mix for 2 hours. Paint films from the foregoing latex paints were drawn down at 1 mil, air dried for at least 24 hours, and then tested for the following results:

| LTFF | Paint Ex. 1 | Paint Ex. 2 |
|---|---|---|
| 70°F | pass | pass |
| 50°F | pass | pass |
| 40°F | pass | pass |

Dried paint films are considered to pass low temperature film formation (LTFF) if the dried coating has no tacking and is visible under ten-times magnification.

Example 4

The following data was generated by blending an emulsion of an MPD/ADA modifier (methyl propane diol/adipic acid polyester of MW ca 1200) with the vinyl acetate homopolymer latex. The MPD/ADA oligomer modifier was prepared as in Example 1 by reacting:
    877 gms of adipic acid
    630.7 gms of 2-methyl-1,3-propane diol

0.2 gms of butylstanoic acid

The emulsion was prepared as in Example 1 with a Ross ME-100L rotor-stator mixer, which produced a sub-micron pre-emulsion in size.

TABLE 1

| Effect of Blended Modified on MFT | | | |
|---|---|---|---|
| PCT Modifier (Ex. 4) | Initial (Ca. 30°C) | After 24 Hours | After 5 Days |
| 20 | 20 | 13 | 18 |
| 30 | 13 | 9 | 14 |
| 40 | 10 | 7 | 10 |
| 0 | 35 | | |

As can be seen, oligomeric modifier appears to diffuse into the latex, lowering its MFT. The Fox Equation relationship appears to hold quite well for blends of compatible oligomers with latex, and the estimated fraction of the oligomeric modifier which diffused into the latex. Table 2 summarizes these calculations:

TABLE 2

| Estimated Extent of Diffusion | |
|---|---|
| PCT Modifier | Pct Diffused |
| 20 | 65 |
| 30 | 56 |
| 40 | 50 |

It was found that the foregoing MPD/ADA oligomeric modifier is effective as a film-forming modifier in accordance with this invention but is not as effective as the adipic acid dipropylene glycol polyester of Examples 1 and 2.

Examples 5 - 8

A series of polyester modifiers were prepared as follows:

TABLE 3

| | Ex. 5 | Ex. 6 | Ex. 7 | Ex. 8 |
|---|---|---|---|---|
| Neopentyl glycol | 416.8 | 312.6 | --- | --- |
| Azelaic acid | 564.6 | 376.4 | --- | --- |
| Adipic acid | --- | --- | 146.2 | 584.8 |
| Dipropylene glycol | --- | --- | 268.4 | --- |
| Benzoic acid | --- | --- | 183.2 | --- |
| 2-methyl-1,3-propane diol | --- | --- | --- | 180.2 |
| 2-ethyl hexanol | --- | --- | --- | 520.8 |
| Butyl stanoic acid | 0.2 | 0.2 | 0.2 | 0.4 |

The polyester oligomers were synthesized as in Example 1.

Example 9

A polyester amide was prepared as follows:
13.4 g 2-methyl-1,5-pentane diamine
100.3 g DBE-3 (DuPont, dimethyl adipate)
77.4 g dipropylene glycol
0.1 g butyl stanoic acid

Heat under nitrogen with good agitation to about 220°C. Use a glass bead packed column to distill off methanol, keeping column head temperature at 65°C. Switch to a trap when distillation slows down. Cool after 4 hours at 200°C.

Emulsions of the modifiers were prepared as in Example 1 and blended with a commercial acrylic latex (8°C Tg, DSC, methylmethacrylate-butyl acrylate) and a styrene latex (37°C Tg, DSC, styrene-ethyl-acrylate) as follows:

PAINT FORMULA

| A) Premix the following components: | |
| --- | --- |
| | Grams |
| water | 200 |
| cellulosic thickener | 1.0 |
| preservative | 2.0 |
| defoamer | 1.0 |
| polymeric dispersant | 6.0 |
| surfactant | 4.0 |
| B) Add the following to (A) and disperse 5 minutes at moderate speed: | |
| | Grams |
| titanium dioxide | 162.7 |
| extender pigment | 132.65 |
| crystalline silica | 85.65 |
| colloidal silicate | 2.00 |
| C) Add the following to (A) and (B) mixture and mix 15 minutes at high speed: | |
| | Grams |
| water | 100 |
| defoamer | 2.0 |
| D) Premix the following and then add to the above and mix 15 minutes at low speed: | |
| | Grams |
| water | 60.0 |
| cellulosic thickener | 4.5 |
| E) Add the following and mix 15 minutes moderate speed: | |
| | Grams |
| modified latex | 264 |
| F) Add the following components to the above mixture: | |
| | Grams |
| Water | 70 |
| defoamer | 3.0 |
| polyurethane associative thickener | 10.0 |

TABLE 4

| Acrylic Latex: | | |
| --- | --- | --- |
| Example | Modifier | 40°F LTFF |
| 10 | 5% Example 5 | pass |
| 11 | 5% Example 6 | pass |
| 12 | 5% Example 7 | pass |
| 13 | 5% Example 8 | pass |
| 14 | 5% Example 9 | pass |
| 15 | None | fail |

TABLE 4  (continued)

| Styrene Latex: | | |
|---|---|---|
| Example | Modifier | 70°F LTFF |
| 16 | Example 7 | pass |
| 17 | None | fail |

The following examples illustrate the process of this invention where the oligomer is mixed with ethylenic monomer prior to emulsion polymerization. Polyesters with a range of molecular weights and structures can function as effective non-volatile plasticizing and coalescing agents for emulsion addition copolymers, where comonomer is not needed with vinyl acetate polymer and coalescing aid is not required for good film formation. Avoiding the use of coalescing solvents is possible because the higher molecular weight polyesters are dissolved in polyvinyl acetate monomer and then dispersed into water by high shear and/or ultrasound prior to polymerization of the polyvinyl acetate as illustrated in the following examples.

The following examples reflect the process of this invention wherein the oligomer is dispersed into monomer and then micronized into water followed by copolymerization of the monomer.

Example 10

An adipate polyester oligomer was prepared as follows:

| | Grams |
|---|---|
| Adipic acid | 438.6 |
| Diethylene glycol | 382 |
| Butylstanoic acid | 0.5 |

The above raw materials were heated in a 2 liter flask under a nitrogen blanket with mechanical stirring to 170°C while using the head temperature above a column packed with glass beads to regulate the esterification reaction. With a head temperature of 98ºC, the reaction temperature increased slowly to 220ºC, where the temperature was held for 2 hours and then cooled.

An aqueous suspension of vinyl acetate monomer and the above adipate polyester was prepared from the following materials.

| | | Grams |
|---|---|---|
| a) | deionized water | 2000 |
| | MM-80, Mona Chemical[1] | 11.2 |
| | $(NH_4) HCO_3$ | 2.5 |
| | NaAMPS, Lubrizol Corp. | 2.5 |
| | vinyl acetate monomer | 625 |
| b) | polyester from above | 312 |
| | MT-70, Mona Chemical[2] | 5.6 |
| c) | $(NH_4)_2 S_2O_8$ | 5.0 |
| d) | vinyl acetate monomer | 625 |
| | MT-70[3] | 5.6 |

[1] MM-80 = sodium dihexyl sulfosuccinate
[2] NaAMPS = sodium acrylamide methyl propane sulfonate
[3] MT-70 sodium ditridecyl sulfosuccinate

Organic solution (a) was dispersed in aqueous solution (b) with a prop stirrer at about 5000 rpm for 20 seconds and passed through the flow through cell of a Sonics Corp. model VC-600 ultrasonic device at 85% power. The resulting aqueous emulsion was heated with stirring under a nitrogen blanket to 65°C. Component (c) was added and 65°C was held for 1.5 hours. Monomer mixture (d) was added over 3 hours at 72°C, held 1 hour, and then cooled.

Example 11

In a manner similar to Example 10, a phthalate polyester oligomer was prepared, mixed with vinyl acetate monomer, micronized into water by high shear, and polymerized. The phthalate polyester was as follows:

|  | Grams |
|---|---|
| phthalic anhydride | 593 |
| diethylene glycol | 318.3 |
| butyl cellosolve | 236.4 |

The raw materials were heated under nitrogen to 200°C, then slowly raised to 220°C over 2 hours while keeping the head temperature of the packed distillation column at 98°C. Total distillate was 73 g. A suspension of the above phthalate polyester was prepared as follows:

|  |  | Grams |
|---|---|---|
| a) | deionized water | 800 |
|  | MM-80 | 3.0 |
|  | $NaHCO_3$ | 2.0 |
| b) | vinyl acetate monomer | 250 |
|  | polyester (Ex. 11 above) | 80 |
| c) | $K_2S_2O_8$ | 2.0 |
| d) | vinyl acetate monomer | 250 |
|  | MT-70 | 3.0 |

The procedure for polymerizing the ethylenic monomers was the same as described in Example 10.

Example 12

In a manner similar to Example 11, a polymer was prepared except that the amount of phthalate polyester was increased from 80 grams to 150 grams.

Example 13

In a manner similar to Example 11, a polymer was prepared using the following components using a commercial polyester believed to be a polyether-phthalate-polyester capped with benzoic acid (Hercoflex 900, Hercules Corp.).

|  |  | Grams |
|---|---|---|
| a) | deionized water | 2000 |
|  | MM-80 | 15 |
|  | $NaHCO_3$ | 2.5 |
|  | $NaHCO_3$ | 7.5 |
|  | NaAMPS | 2.5 |
| b) | vinyl acetate monomer | 625 |
|  | Hercoflex 900, (Hercules Corp.) | 250 |
| c) | $K_2S_2O_8$ | 5.0 |
| d) | vinyl acetate monomer | 625 |
|  | MT-70 | 7.5 |

The procedure from Example 10 was used to copolymerize the monomers and produce a latex polymer.

### Example 14

In a manner similar to Example 10, a polyester triester was prepared from the following reactants:

| | Grams |
|---|---|
| Ektasolve DB, Eastman Chem. (diethylene glycol butyl ether) | 365 |
| trimelitic anhydride | 145 |
| butylstanoic acid | 0.1 |

The water of reaction distilled off was 29 grams.

A polymer was prepared according to the polymerization process described in Example 12 but from the following components:

| | | Grams |
|---|---|---|
| a) | deionized water | 800 |
| | MM-80 | 3.0 |
| | $NaHCO_3$ | 2.0 |
| b) | vinyl acetate monomer | 250 |
| | triester from above | 50 |
| | MT-70 | 1.0 |
| c) | $K_2S_2O_8$ | 2.0 |
| | vinyl acetate monomer | 250 |
| | MT-70 | 3.0 |

### Example 15

Clear unpigmented films were prepared from the polymers prepared in Examples 10-14. Physical properties of latex and air dried clear paint films were as follows:

| Suspension Tack | | Min. Film Temp. Crack Point | Min. Film Temp. Knife Point |
|---|---|---|---|
| | Ex. 10 | <3 | <3 |
| | None | | |
| | Ex. 11 | 12 | 24 |
| | None | | |
| | Ex. 12 | 3 | 9 |
| | None | | |
| | Ex. 13 | <3 | 6 |
| | None | | |
| | Ex. 14 | 4 | 15 |
| | None | | |
| | Control * | 10 | 12 |
| | None | | |

*Control was an unmodified commercial latex typically used in consumer air-dry paints and comprising 80/20 weight ratio of vinyl acetate polymerized with butyl acrylate.

### Example 16

White semi-gloss latex paints were prepared from any one of the foregoing emulsion polymers described in Examples 10-14 from the following ingredients:

Pigment Grind:

| Group | Ingredient | Grams |
|---|---|---|
| A | Water | 151.68 |
| A | Thickener | .50 |
| A | Ammonia (28%) | .01 |
| B | Surfactant | 5.00 |
| C | Defoamer | 2.00 |
| C | Surfactant | 2.00 |
| D | TiO$_2$ pigment | 145.00 |
| D | Clay extender pigment | 50.00 |

Group A ingredients were added to Cowles dispersing equipment and mixed for 5 minutes. Group B and then C ingredients were added with continued mixing under slow agitation. Group D ingredients were added under high speed agitation and grind for 15 minutes or until a Hegman 5.5 was attained. The foregoing is the grind portion of the paint.

| Letdown | Ingredient | Grams |
|---|---|---|
| E | Water | 33.00 |
| F | Water | 33.00 |
| F | Thickener | 3.50 |
| F | Ammonia Hydroxide | .01 |
| G | Preservative | 1.00 |
| H | Defoamer | 5.00 |
| H | Propylene glycol | 40.00 |
| H | Surfactant | 4.50 |
| H | Rheology Modifier | 9.00 |
| H | Surfactant | 3.00 |
| I | Latex | 393.00 |
| I | Opacifier latex | 105.00 |

Group E ingredients were added in separate vessel, followed by Premix F added to E ingredients with slow speed agitation. Group G ingredients were added at slow speed. Premix H ingredients were then added to vessel. Premix I ingredients were mixed for 30 minutes and then added to vessel. The final composition was mixed for 1 hour. The foregoing is the letdown portion of the paint.

Latex Paint

The letdown above was added to the pigment grind above under slow speed agitation and allowed to mix for 2 hours.

Example 17

Benzoic acid capped polyester oligomer modifier.

| Ingredient | Grams |
|---|---|
| adipic acid | 731 |
| diethylene glycol | 637 |
| butylstanoic acid | 0.5 |
| benzoic acid | 244 |

Heat the above components gradually with adequate stirring under a nitrogen atmosphere to 220°C. (Water will begin to distill at about 170°C, and about 3 hours will be required to move the batch from 170°C to 220°C). Using a packed column, maintain the head temperature at 99°C throughout this portion of the synthesis. When the head temperature drops below 80°C, remove the column and replace with a Dean-Stark trap. Fill the trap with xylene, and then add just enough additional xylene to give a constant reflux. Allow xylene reflux to azeotrophe water out of the batch, and reduce acid number to about 10 mg KOH/g resin. Remove xylene under a vacuum (25 inches Hg). Cool.

Example 18

Benzoic acid capped polyester urethane oligomer modifier

As in Example 17, but use only 122 g benzoic acid, then cool batch to 60°C at the end of the synthesis, and add 111 g isophorone diisocyanate. Allow the exotherm to carry the temperature (with gentle heating) to 90°C, and hold for 2 hours. Cool.

Example 19

Polyester urethane oligomeric external modifier

| Ingredient | Grams |
|---|---|
| adipic acid | 731 |
| diethylene glycol | 636 |
| butylstanoic acid | 0.5 |

Synthesize a polyester from the above ingredients in the same manner as in Example 17, and then add 111 g isophorone diisocyanate to form a polyester urethane as in Example 18.

Example 20

Polyester urethane external modifier

| Ingredient | Grams |
|---|---|
| adipic acid | 366 |
| dipropylene glycol | 403 |
| butylstanoic acid | 0.2 |

Form a polyester from the above ingredients as in Example 17, and then add 56 g isophorone diisocyanate to form a urethane as in Example 18.

Example 21

Polyester urethane urea oligomeric external modifier

| Ingredient | Grams |
|---|---|
| adipic acid | 731 |
| dipropylene glycol | 805 |
| butylstanoic acid | 0.5 |

Synthesize a polyester from the above as in Example 17, and place 300 g of the product in a separate flask at 20°C. Add 29 g isophorone diisocyanate and 30 g Jeffamine ED-2001 polyethylene oxide diamine, 2000 mol. wt. no. ave. - Texaco. The Jeffamine is predissolved in 30 g vinyl acetate to enhance miscibility. Slowly warm to 40°C to allow amine reaction with isocyanate, hold 1 hour, and then heat to 90°C. Hold 2 hours, and then cool.

Example 22

Polyester amide external oligomer modifier

| Ingredient | Grams |
|---|---|
| DBE-5 (dimethyl ester of glutaric acid, DuPont) | 481 |

(continued)

| Ingredient | Grams |
|---|---|
| dipropylene glycol | 268 |
| Dytek A (2-methylpentane diamine) | 58 |
| butylstanoic acid | 0.2 |

Warm with good agitation under nitrogen to about 190°C and distill off methanol with a good packed column. Keep column head temperature at 64°C, and gradually warm batch to 210°C. Cool after 160 g of methanol is removed.

## Example 23

Polyester amide external oligomer modifier

| Ingredient | Grams |
|---|---|
| DBE-5 | 481 |
| dipropylene glycol | 268 |
| Jeffamine D-230 (polypropylene oxide diamine) | 115 |
| butylstanoic acid | 0.5 |

Synthesized by same procedure as in Example 22.

## Example 24

Polyester external oligomer modifier

| Ingredient | Grams |
|---|---|
| dipropylene glycol | 4717 |
| adipic acid | 4283 |
| triphenyl phosphine | 1.2 |
| butylstanoic acid | 3.0 |

Synthesize as in Example 17, but do not use xylene. When column head temperature drops to 80°C acid number is about 20 mg KOH/g resin. Pull a vacuum of about 10 inches of Hg, and then gradually increase vacuum to pull off remaining water. Final acid number is 3 mg KOH/g resin.

## Example 25

Latexes were prepared with the following generalized formula and synthesized as described below.

| a) | 2122 g | deionized water |
|---|---|---|
| | 8.5 g | MA-80 (dihexyl sulfosuccinate, Mona Chem.) |
| | 5.4 g | ammonium acetate |
| | 8.1 g | Na AMPS, 48% (Lubrizol Chemical) |
| | 10.5 g | A246L (Na olefin sulfonate, Rhone Poulenc) |
| b) | 7.4 g | Na formaldehyde sulfoxylate |
| | 10 ml | $FeSO_4$ aqueous solution, 1000 ppm |

(continued)

| | | |
|---|---|---|
| c) | 869 g | vinyl acetate |
| | 370 g | modifier as above from Examples 8 to 16 |
| | 3.1 g | acrylic acid |
| d) | 6.3 g | ammonium persulfate |
| | 14 g | A246L |
| | 159 g | deionized water |
| e) | 874 g | vinyl acetate |
| | 3.1 g | acrylic acid |
| f) | 2.0 g | ammonium persulfate |
| | 27 g | deionized water |

Weigh and mix thoroughly groups (a) and (c). Combine groups (a) and (c), stir with a spatula to disperse, and then emulsify for 5 minutes at 10,000 rpm in a Ross ME 100L emulsifier. Add (b) ingredients to the emulsion, and warm in a 5 liter Morton flask to 50°C with good agitation under nitrogen. Pump in 40 ml of (d) over 2.5 hours, adjusting pumping rate to give a reaction temperature of about 55°C. Pump in the rest of (d) and all of (e) over 3 hours. Pump in (f) over 1 hour. Cool.

Examples 26-33

Latexes approximately equivalent were prepared as in Example 25 and mixed with modifiers identified in the following Table.

TABLE

| Ex. Tack | Modifier | DSC Tg | Knife Point MFFT | Dry Film |
|---|---|---|---|---|
| 26 | Ex. 17 | 0 | 8.2 | None |
| 27 | Ex. 18 | 11 | 8.8 | None |
| 28 | Ex. 19 | 11 | 12.5 | None |
| 29 | Ex. 20 | 10 | 13.7 | None |
| 30 | Ex. 21 | 13 | 19.5 | None |
| 31 | Ex. 22 | 6 | 7.6 | None |
| 32 | Ex. 23 | -5 | 10.0 | Tacky |
| 33 | Ex. 24 | -- | 16.5 | None |
| *DSC Tg's in degrees C (single, distinct transitions are noted). MFFT = minimum film formation temperature in degree C (knife point). Tack and MFFT were measured for dry latex films (only DSC Tg was measured for modifiers). | | | | |

The film from Example 32 is tacky at room temperature, while the other latexes form good, tack free films. Generally, Tg's in the 5-10°C range are preferred. MFFT's of 20°C or less are preferred, indicating that good ambient and low temperature film formation will occur. Example 32 was marginally tacky due to low Tg of the film.

## Claims

1. An aqueous coating composition including an emulsion polymerised polymeric binder having a Tg below 20°C, which binder contains an addition copolymer of aqueous polymerised ethylenic monomers, wherein the binder also contains 3 to 70% of a polyurethane or a polyester and/or a polyester-polyurethane copolymer oligomer modifier having a molecular weight between 200 and 20,000 and wherein the oligomer modifier is present in the aqueous composition as a micro-emulsion of droplets, having a droplet size of less than 10 microns, characterised in that the oligomer modifier has a Tg below -20°C, whereby the coating composition is capable of air-drying at ambient temperatures.

2. An aqueous coating composition as claimed in Claim 1, characterised in that the polymeric binder comprises: an addition copolymer of aqueous polymerized ethylenic monomers containing an oligomer modifier having a molecular weight between about 200 and 20,000 and a Tg below about -20°C, the oligomer selected from a polyurethane, a polyester and/or a polyester-polyurethane copolymer, wherein the modifier is dispersed into water by high shear mixing to provide a micro-emulsion having a droplet size less than 10 microns.

3. A coating composition as claimed in Claim 1 or Claim 2, characterised in that the oligomer modifier is dispersed into water by high shear mixing at temperatures between 20°C and 100°C of an aqueous mixture of the oligomer and water, where the mixture contains between 40% and 70% oligomer, and the oligomer has a number average molecular weight between about 300 and 5,000 and a Tg less than -20°C.

4. A coating composition as claimed in any one of the preceding Claims containing between 3% and 50% by weight of the oligomer modifier, characterised in that the polymeric binder is produced by mixing the oligomer in the ethylenic monomer to provide an organic solution of oligomer and ethylenic monomer, where said organic solution is dispersed into and polymerized in water to produce an oligomer modified addition copolymer emulsion polymer where the oligomer is soluble in the polymerized monomer.

5. A coating composition as claimed in any one of the preceding Claims characterised in that the oligomeric modifier has a molecular weight between 500 and 2,000.

6. A coating composition as claimed in any one of the preceding Claims characterised in that the aqueous mixture comprises by weight between about 55% and 65% oligomer modifier forming the micro-emulsion.

7. A coating composition as claimed in any one of the preceding Claims characterised in that the micro-emulsion was produced by high shear mixing of the aqueous mixture of oligomer at temperatures between 45°C and 60°C.

8. A coating composition as claimed in any one of the preceding Claims characterised in that the micro-emulsion droplet size is on average between 0.1 and 1 micron.

9. A coating composition according to any one of the preceding Claims, characterised in that the oligomer has a Tg less than about -50°C.

10. A coating composition according to any one of the preceding Claims where the addition polymer comprises emulsion copolymerized vinyl acetate, acrylic and/or acrylic-styrene (co)monomer.

11. A process for producing an aqueous ambient dry coating composition, containing a polymeric binder free of organic coalescing solvent, characterised in that the process steps for producing the polymeric binder comprising:

producing a micronized, aqueous pre-emulsion of oligomer modifier selected from a polyurethane, a polyester, and/or a polyester-polyurethane copolymer, the pre-emulsion having an organic phase droplet size less than 10 microns by high shear mixing at temperatures between 20°C and 100°C of an aqueous mixture of the oligomer containing by weight between 40% and 70% oligomer, where the oligomer has a Tg less than -20°C and number average molecular weight between about 300 and 5,000;
mixing the pre-emulsion with an emulsion copolymerized addition polymer comprising ethylenically unsaturated monomers to produce a polymeric binder containing by weight between about 3% and 30% oligomer, where the polymeric binder has a Tg less than 20°C.

12. A process according to Claim 11, characterised in that micronizing produces a micro-emulsion having an organic phase particle size droplet less than 1 micron.

13. A process according to Claim 11 or Claim 12, characterised in that the micronizing produces organic phase particle size droplets less than 0.7 microns.

14. A process according to any one of Claims 11 to 13, characterised in that the micro-emulsion is formed at temperatures between about 45°C and 60°C.

**15.** A process according to any one of Claims 11 to 14, characterised in that the oligomer has a molecular weight between 500 and 2,000.

**16.** A process for producing an aqueous ambient dry paint coating, containing a polymeric binder free of organic coalescing solvent, characterised in that the process steps for producing the polymeric binder comprising:

providing an organic solution comprising vinyl acetate monomer and oligomer having a number average molecular weight between 200 and 20,000 and selected from a polyurethane, a polyester, and/or a polyester-polyurethane copolymer, the oligomer having a Tg below about -20°C, where the organic solution contains at least 3% by weight of said oligomer;
dispersing the organic solution into water to produce an aqueous dispersion;
micronizing the aqueous dispersion under high shear to produce a micro-dispersion having organic phase particle size droplets less than 5 microns; and
polymerizing the vinyl acetate monomer to produce a polymeric binder having a Tg less than 20°C, comprising an emulsion vinyl acetate polymer containing said oligomer.

**17.** A process according to Claim 16, characterised in that micronizing produces organic phase particle size droplets less than 1 micron.

**18.** A process according to Claim 16 or Claim 17, characterised in that the micronizing produces organic phase particle size droplets less than 0.7 microns.

**Patentansprüche**

**1.** Wäßrige Beschichtungszusammensetzung, die einen emulsionspolymerisierten polymeren Binder mit einer Tg unterhalb 20°C enthält, wobei der Binder ein Additions-Copolymer eines wäßrig polymerisierten ethylenischen Monomers und ferner 3 bis 70% eines Polyurethan- oder eines Polyester- und/oder eines Polyester-Polyurethan-Copolymer-Oligomer-Reglers mit einem Molekulargewicht zwischen 200 und 20000 enthält, wobei der Oligomer-Regler in der wäßrigen Zusammensetzung in Form einer Mikroemulsion aus Tröpfchen mit einer Tröpfchengröße von weniger als 10 μm vorliegt,
dadurch gekennzeichnet,
daß der Oligomer-Regler eine Tg unterhalb -20°C hat, wodurch die Beschichtungszusammensetzung bei Umgebungstemperaturen an der Luft trocknen kann.

**2.** Wäßrige Beschichtungszusammensetzung nach Anspruch 1,
dadurch gekennzeichnet,
daß der polymere Binder enthält:
ein Additions-Copolymer aus wäßrig polymerisierten ethylenischen Monomeren, das einen Oligomer-Regler mit einem Molekulargewicht zwischen etwa 200 und 20000 und einer Tg unterhalb etwa -20°C enthält, wobei das Oligomer unter einem Polyurethan, einem Polyester und/oder einem Polyester-Polyurethan-Copolymer ausgewählt ist und der Regler durch hochscherendes Durchmischen unter Bereitstellung einer Mikroemulsion mit einer Tröpfchengröße von weniger als 10 μm in Wasser dispergiert wird.

**3.** Beschichtungszusammensetzung nach Anspruch 1 oder 2,
dadurch gekennzeichnet,
daß der Oligomer-Regler in Wasser dispergiert wird, indem bei Temperaturen zwischen 20°C und 100°C ein wäßriges Gemisch aus dem Oligomer und Wasser hochscherend durchmischt wird, wobei das Gemisch zwischen 40 % und 70% Oligomer enthält und das Oligomer ein Molekulargewicht-Zahlenmittel zwischen etwa 300 und 5000 und eine Tg von niedriger als -20°C hat.

**4.** Beschichtungszusammensetzung nach einem der vorhergehenden Ansprüche, die zwischen 3 Gew.-% und 50 Gew.-% des Oligomer-Reglers enthält, dadurch gekennzeichnet, daß der polymere Binder hergestellt wird, indem das Oligomer in das ethylenische Monomer unter Erhalt einer organischen Lösung des Oligomers und des ethylenischen Monomers eingemischt wird, wobei die organische Lösung unter Bildung eines oligomer-modifizierten Additions-Copolymer-Emulsions-Polymers in Wasser dispergiert und polymerisiert wird und das Oligomer in dem polymerisierten Monomer löslich ist.

**5.** Beschichtungszusammensetzung nach einem der vorhergehenden Ansprüche, dadurch gekennzeichnet, daß der oligomere Regler ein Molekulargewicht zwischen 500 und 2000 hat.

**6.** Beschichtungszusammensetzung nach einem der vorhergehenden Ansprüche, dadurch gekennzeichnet, daß das wäßrige Gemisch zwischen etwa 55 Gew.-% und 65 Gew.-% des die Mikroemulsion bildenden Oligomer-Reglers enthält.

**7.** Beschichtungszusammensetzung nach einem der vorhergehenden Ansprüche, dadurch gekennzeichnet, daß die Mikroemulsion durch hochscherendes Durchmischen des wäßrigen Oligomer-Gemisches bei Temperaturen zwischen 45°C und 60°C hergestellt wird.

**8.** Beschichtungszusammensetzung nach einem der vorhergehenden Ansprüche, dadurch gekennzeichnet, daß die Tröpfchengröße der Mikroemulsion im Durchschnitt zwischen 0,1 und 1,0 μm beträgt.

**9.** Beschichtungszusammensetzung nach einem der vorhergehenden Ansprüche, dadurch gekennzeichnet, daß das Oligomer eine Tg von niedriger als etwa -50°C hat.

**10.** Beschichtungszusammensetzung nach einem der vorhergehenden Ansprüche, wobei das Additions-Polymer emulsions-copolymerisierte Vinylacetat-, Acryl- und/oder Acryl-Styrol- (Co)Monomere umfaßt.

**11.** Verfahren zur Herstellung einer wäßrigen, unter Umgebungsbedingungen trocknenden Beschichtungszusammensetzung, die einen von einem organischen Koaleszenzlösungsmittel freien polymeren Binder enthält, dadurch gekennzeichnet,
daß bei dem Verfahren zur Herstellung des polymeren Binders:

eine mikronisierte, wäßrige Voremulsion des unter einem Polyurethan-, einem Polyester- und/oder einem Polyester-Polyurethan-Copolymer ausgesuchten Oligomer-Reglers hergestellt wird, wobei die Voremulsion eine Tröpfchengröße der organischen Phase von weniger als 10 μm hat, indem ein wäßriges Gemisch des Oligomers, das zwischen 40 Gew.-% und 70 Gew.-% Oligomer enthält, bei Temperaturen zwischen 20°C und 100°C hochscherend durchmischt wird, wobei das Oligomer eine Tg von niedriger als -20°C und ein Molekulargewicht-Zahlenmittel zwischen etwa 300 und 5000 hat,

die Voremulsion mit einem emulsions-copolymerisierten Additions-Polymer, das ethylenisch ungesättigte Monomere aufweist, unter Bildung eines polymeren Binders vermischt wird, der zwischen etwa 3 Gew.-% und 30 Gew.-% Oligomer enthält, wobei der polymere Binder eine Tg von niedriger als 20°C hat.

**12.** Verfahren nach Anspruch 11, dadurch gekennzeichnet, daß sich durch das Mikronisieren eine Mikroemulsion mit einer Tröpfchenteilchengröße der organischen Phase von weniger als 1 μm ergibt.

**13.** Verfahren nach Anspruch 11 oder 12, dadurch gekennzeichnet, daß sich durch das Mikronisieren eine Tröpfchenteilchengröße der organischen Phase von weniger als 0,7 μm ergibt.

**14.** Verfahren nach einem der Ansprüche 11 bis 13, dadurch gekennzeichnet, daß die Mikroemulsion bei Temperaturen zwischen etwa 45°C und 60°C gebildet wird.

**15.** Verfahren nach einem der Ansprüche 11 bis 14, dadurch gekennzeichnet, daß das Oligomer ein Molekulargewicht zwischen 500 und 2000 hat.

**16.** Verfahren zur Herstellung einer wäßrigen, unter Umgebungsbedingungen trocknenden Anstrichbeschichtung, die einen von einem organischen koaleszenzlösungsmittel freien polymeren Binder enthält, dadurch gekennzeichnet, daß bei dem Verfahren zur Herstellung des polymeren Binders:

eine organische Lösung bereitgestellt wird, die ein Vinylacetat-Monomer und ein Oligomer mit einem Molekulargewicht-Zahlenmittel zwischen 200 und 20000, das unter einem Polyurethan, einem Polyester und/oder einem Polyester-Polyurethan-Copolymer ausgewählt ist, enthält, wobei das Oligomer eine Tg unterhalb etwa -20°C hat und die organische Lösung mindestens 3 Gew.-% des Oligomers enthält,

die organische Lösung unter Bildung einer wäßrigen Dispersion in Wasser dispergiert wird,

die wäßrige Dispersion unter hoher Scherung unter Bildung einer Mikrodispersion mit einer Tröpfchenteilchengröße der organischen Phase von weniger als 5 µm mikronisiert wird und

das Vinylacetat-Monomer unter Bildung eines polymeren Binders mit einer Tg von niedriger als 20°C polymerisiert wird, der ein das Oligomer enthaltendes Vinylacetat-Emulsionspolymer enthält.

17. Verfahren nach Anspruch 16, dadurch gekennzeichnet, daß durch das Mikronisieren eine Tröpfchenteilchengröße der organischen Phase von weniger als 1 µm gebildet wird.

18. Verfahren nach Anspruch 16 oder 17, dadurch gekennzeichnet, daß durch das Mikronisieren eine Tröpfchenteilchengröße der organischen Phase von weniger als 0,7 µm gebildet wird.

## Revendications

1. Composition aqueuse de revêtement comprenant un liant polymérique, polymérisé en émulsion, ayant une Tg inférieure à 20°C, liant qui contient un copolymère d'addition de monomères éthyléniques polymérisés en milieu aqueux, dans laquelle le liant contient également 3 à 70 % d'un modificateur oligomère de polyuréthanne ou de polyester et/ou de copolymère polyester-polyuréthanne ayant un poids moléculaire compris dans l'intervalle de 200 à 20 000, et dans laquelle le modificateur oligomère est présent dans la composition aqueuse sous forme d'une micro-émulsion de gouttelettes, ayant un diamètre de gouttelette inférieur à 10 micromètres, caractérisée en ce que le modificateur oligomère a une Tg inférieure à -20°C, ce qui fait que la composition de revêtement peut sécher à l'air aux températures ambiantes.

2. Composition aqueuse de revêtement suivant la revendication 1, caractérisée en ce que le liant polymérique comprend :

   un copolymère d'addition de monomères éthyléniques polymérisés en milieu aqueux, contenant un modificateur oligomère ayant un poids moléculaire compris dans l'intervalle d'environ 200 à 20 000 et une Tg inférieure à environ -20°C, l'oligomère étant choisi entre un polyuréthanne, un polyester et/ou un copolymère polyester-polyuréthanne, ledit modificateur étant dispersé dans l'eau par mélange dans des conditions de fort cisaillement pour produire une micro-émulsion ayant un diamètre de gouttelette inférieur à 10 micromètres.

3. Composition de revêtement suivant la revendication 1 ou la revendication 2, caractérisée en ce que le modificateur oligomère est dispersé dans l'eau en mélangeant, dans des conditions de fort cisaillement, à des températures comprises dans l'intervalle de 20°C à 100°C, un mélange aqueux de l'oligomère et d'eau, le mélange contenant 40 % à 70 % d'oligomère, et l'oligomère ayant une moyenne numérique du poids moléculaire comprise dans l'intervalle d'environ 300 à 5000 et une Tg inférieure à -20°C.

4. Composition de revêtement suivant l'une quelconque des revendications précédentes, contenant 3 % à 50 % en poids du modificateur d'oligomère, caractérisée en ce que le liant polymérique est produit en mélangeant l'oligomère dans le monomère éthylénique pour produire une solution organique d'oligomère et de monomère éthylénique, ladite solution organique étant dispersée et polymérisée dans de l'eau pour produire un polymère en émulsion constitué d'un copolymère d'addition modifié avec l'oligomère, cet oligomère étant soluble dans le polymère polymérisé.

5. Composition de revêtement suivant l'une quelconque des revendications précédentes, caractérisée en ce que le modificateur oligomère a un poids moléculaire compris dans l'intervalle de 500 à 2000.

6. Composition de revêtement suivant l'une quelconque des revendications précédentes, caractérisée en ce que le mélange aqueux comprend, en poids, environ 55 % à 65 % de modificateur oligomère formant la micro-émulsion.

7. Composition de revêtement suivant l'une quelconque des revendications précédentes, caractérisée en ce que la micro-émulsion a été produite en mélangeant, dans des conditions de fort cisaillement, le mélange aqueux d'oligomère à des températures comprises dans l'intervalle de 45°C à 60°C.

8. Composition de revêtement suivant l'une quelconque des revendications précédentes, caractérisée en ce que le diamètre des gouttelettes de micro-émulsion est, en moyenne, compris dans l'intervalle de 0,1 à 1 micromètre.

9. Composition de revêtement suivant l'une quelconque des revendications précédentes, caractérisée en ce que l'oligomère a une Tg inférieure à environ -50°C.

10. Composition de revêtement suivant l'une quelconque des revendications précédentes, dans laquelle le polymère d'addition comprend un (co)monomère acétate de vinyle, acrylique et/ou acrylique-styrène copolymérisé en émulsion.

11. Procédé pour la production d'une composition aqueuse de revêtement séchant à température ambiante, contenant un liant polymérique dépourvu de solvant organique de coalescence, caractérisé en ce que les étapes de mise en oeuvre du procédé pour la production du liant polymérique comprennent :

la production d'une pré-émulsion aqueuse micronisée de modificateur oligomère choisi entre un polyuréthanne, un polyester et/ou un copolymère polyester-polyuréthanne, la pré-émulsion ayant un diamètre des gouttelettes de la phase organique inférieur à 10 micromètres en mélangeant, dans des conditions de fort cisaillement, à des températures comprises dans l'intervalle de 20°C à 100°C, un mélange aqueux de l'oligomère contenant, en poids, 40 % à 70 % d'oligomère, l'oligomère ayant une Tg inférieure à -20°C et une moyenne numérique du poids moléculaire comprise dans l'intervalle de 300 à 5000 ;
le mélange de la pré-émulsion à un polymère d'addition, copolymérisé en émulsion, comprenant des monomères à insaturation éthylénique pour produire un liant polymérique contenant, en poids, environ 3 % à 30 % d'oligomère, ledit liant polymérique ayant une Tg inférieure à 20°C.

12. Procédé suivant la revendication 11, caractérisé en ce que la micronisation produit une micro-émulsion ayant un diamètre des gouttelettes des particules de la phase organique inférieur à 1 micromètre.

13. Procédé suivant la revendication 11 ou la revendication 12, caractérisé en ce que la micronisation produit des gouttelettes ayant un diamètre de particule de la phase organique inférieur à 0,7 micromètre.

14. Procédé suivant l'une quelconque des revendications 11 à 13, caractérisé en ce que la micro-émulsion est formée à des températures comprises dans l'intervalle d'environ 45°C à 60°C.

15. Procédé suivant l'une quelconque des revendications 11 à 14, caractérisé en ce que l'oligomère a un poids moléculaire compris dans l'intervalle de 500 à 2000.

16. Procédé pour la production d'un revêtement de peinture aqueuse séchant à température ambiante, contenant un liant polymérique dépourvu de solvant organique de coalescence, caractérisé en ce que les étapes de mise en oeuvre du procédé pour la production du liant polymérique comprennent :

la préparation d'une solution organique comprenant un monomère acétate de vinyle et un oligomère ayant une moyenne numérique du poids moléculaire comprise dans l'intervalle de 200 à 20 000 et choisi entre un polyuréthanne, un polyester et/ou un copolymère polyester-polyuréthanne, l'oligomère ayant une Tg inférieure à environ -20°C, la solution organique contenant au moins 3 % en poids dudit oligomère ;
la dispersion de la solution organique dans de l'eau pour produire une dispersion aqueuse ;
la micronisation de la dispersion aqueuse dans des conditions de fort cisaillement pour produire une micro-dispersion ayant un diamètre des gouttelettes de particules de la phase organique inférieur à 5 micromètres ; et
la polymérisation du monomère acétate de vinyle pour produire un liant polymérique ayant une Tg inférieure à 20°C, comprenant un polymère d'acétate de vinyle en émulsion contenant ledit oligomère.

17. Procédé suivant la revendication 16, caractérisé en ce que la micronisation produit des gouttelettes ayant un diamètre de particules de phase organique inférieur à 1 micromètre.

18. Procédé suivant la revendication 16 ou la revendication 17, caractérisé en ce que la micronisation produit des gouttelettes ayant un diamètre de particules de phase organique inférieur à 0,7 micromètre.